Europäisches Patentamt

(19) European Patent Office

Office européen des brevets

(11) Veröffentlichungsnummer: **0 087 555**
**B1**

(12) **EUROPÄISCHE PATENTSCHRIFT**

(45) Veröffentlichungstag der Patentschrift:
**10.04.85**

(51) Int. Cl.⁴: **E 06 B 9/24**, B 60 J 1/20,
B 60 J 3/02

(21) Anmeldenummer: **83100147.4**

(22) Anmeldetag: **11.01.83**

(54) Sonnenschutzrollo.

(30) Priorität: **20.02.82 DE 3206140**

(43) Veröffentlichungstag der Anmeldung:
**07.09.83 Patentblatt 83/36**

(45) Bekanntmachung des Hinweises auf die Patenterteilung:
**10.04.85 Patentblatt 85/15**

(84) Benannte Vertragsstaaten:
**DE FR GB IT SE**

(56) Entgegenhaltungen:
**DE - A - 2 301 839**
**DE - A - 2 841 218**
**DE - U - 7 038 384**
**DE - U - 8 204 729**

(73) Patentinhaber: **Gebr. Happich GmbH,
Postfach 10 02 49 Clausenbrücke 1,
D-5600 Wuppertal 1 (DE)**

(72) Erfinder: **Chumchal, Franz-Josef, Gertrudenstrasse 29,
D-5600 Wuppertal 1 (DE)**
Erfinder: **Kaiser, Klaus-Peter, Sellscheid 42,
D-5632 Wermelskirchen (DE)**
Erfinder: **Panzer, Rudolf, Samoastrasse 5,
D-5600 Wuppertal 2 (DE)**

## Beschreibung

Die Erfindung bezieht sich auf ein Sonnenschutzrollo, insbesondere für Fahrzeugfenster, mit zwei im Abstand voneinander an einen Fensterrahmen anordbaren Trägern für eine Rollowelle, die an ihren Enden von den Trägern gehalten wird und auf der eine von dieser abwickelbare Materialbahn angeordnet ist.

Sonnenschutzrollos sind in verschiedenen Ausführungsformen bekannt. Sie werden im allgemeinen (vgl. z. B. DE-A Nr. 2301839 oder 2950743) in horizontaler Ausrichtung ihrer Rollowelle an der oberen Rahmenleiste von Fenstern angeordnet. Auch die Anordnung eines Sonnenschutzrollos an der unteren Rahmenleiste eines Fahrzeugfensters ist bekannt (vgl. z. B. DE-A Nr. 2943249).

Die bisher bekanntgewordenen Sonnenschutzrollos haben miteinander gemeinsam, dass ihre Rollowellen jeweils einer horizontalen Anordnung an einem Fensterrahmen bedürfen, damit ein Abwickeln der Materialbahn in hierzu senkrechter Richtung erfolgen kann.

Bei Fahrzeugen heutiger Bauart sind nun häufig Fenster vorgesehen, deren untere und obere Rahmenleisten oftmals nicht parallel zueinander verlaufen. Beispielsweise sind die oberen Rahmenleisten der seitlichen Fahrzeugfenster, unabhängig davon, ob sie unmittelbar in der Fahrzeugseitenwand oder in einer Tür angeordnet sind, in der Regel im vorderen Fahrzeugbereich nach vorne und im hinteren Fahrzeugbereich nach hinten geneigt. Bisher erschien es kaum möglich, auch für solche Fenster Sonnenschutzrollos vorzusehen. Ein bekanntes Sonnenschutzrollo gemäss der DE-A Nr. 2841218 versucht, dieses Problem mit einer konischen Rollowelle zu lösen.

Es ist nun Aufgabe der Erfindung, ein Sonnenschutzrollo für Fenster zu schaffen, dessen Materialbahn auf einfache Art auch dann senkrecht zu einer Rahmenleiste hin bewegt werden kann, wenn die gegenüberliegende Rahmenleiste, an der die Rollowelle angeordnet ist, nicht parallel zur ersteren verläuft.

Gemäss der Erfindung wird diese Aufgabe dadurch gelöst, dass die axiale Ausrichtung der Rollowelle durch eine bewegliche Anordnung zumindest eines der Träger am Fensterrahmen bei Gebrauch des Sonnenschutzrollos veränderbar ist.

Durch diese erfindungsgemässe Massnahme kann in denkbar einfacher Weise ein Parallelitätsausgleich zwischen der Rollowelle und der dieser gegenüberliegenden Rahmenleiste eines Fensters erzielt werden. Dabei ist es von besonderem Vorteil, dass die Rollowelle bei Nichtgebrauch des Sonnenschutzrollos in paralleler Ausrichtung zur Rahmenleiste liegt, an der sie angeordnet ist, und nur bei Gebrauch des Sonnenschutzrollos in eine Lage gebracht wird, die zu der der gegenüberliegenden Rahmenleiste parallel ist. Bei Nichtgebrauch tritt also das Sonnenschutzrollo nicht sichtbar in Erscheinung und behindert damit auch nicht den Stylingverlauf des Fahrzeuges oder den Lichteinfall in ein Fenster.

Es ist denkbar, für den beweglichen Träger eine von Hand vorzunehmende, zumindest zweistufige Verstellbarkeit mit entsprechenden Endrastungen vorzusehen. Eine bevorzugte Ausgestaltung der Erfindung besteht jedoch darin, dass der Träger gegen die Wirkung einer Rückstellkraft bewegbar ist. Damit ergibt sich eine automatische Anpassung der Rollowelle in die Gebrauchs- oder Nichtgebrauchslage.

Die Rückstellkraft kann dadurch hervorgerufen werden, dass der Träger an einer Feder angeordnet ist. Als Feder kann dabei mit Vorteil alternativ eine Druckfeder oder vorzugsweise eine Zugfeder vorgesehen sein.

Eine weitere Ausführungsform der Erfindung ist dadurch gekennzeichnet, dass die Rollowelle dreh- und schwenkbeweglich in einer ihren Abmessungen angepassten und bis auf einen Durchlassschlitz für die Materialbahn im wesentlichen geschlossen ausgebildeten Kassette angeordnet ist, die ihrerseits am Fensterrahmen befestigbar ist. Bei dieser Ausführungsform liegt eine die Lagerhaltung und Montage begünstigende Einbaueinheit vor.

Bevorzugterweise besteht die Kassette aus zwei ineinandergeschachtelten kastenförmigen Kassettenteilen mit jeweils im wesentlichen U-förmigem Querschnitt, wobei das die Rollowelle zwischen ihren die Träger bildenden Stirnenden aufnehmende Kassettenteil mit einem Endbereich scharnierend am anderen Kassettenteil gelagert ist. Dabei sind die Kassettenteile als Kunststoffspritzgusskörper ausgebildet und in der ineinandergeschachtelten Zusammenbaulage einendig durch einen sie querenden Scharnierstift oder durch angespritzte, in entsprechende Aufnahmen des anderen Teils eingreifende Lagerzapfen und anderendig durch eine Feder miteinander verbunden.

Die Erfindung wird nachfolgend anhand der Zeichnung, die Ausführungsbeispiele zeigt, näher erläutert. Es zeigen

Fig. 1 die schematische Darstellung eines Fahrzeugseitenfensters mit einem an der oberen Rahmenleiste angeordneten Sonnenschutzrollo,

Fig. 2 ein Sonnenschutzrollo einer ersten Ausführungsform,

Fig. 3 die Seitenansicht,

Fig. 4 die zugehörige Draufsicht, und

Fig. 5 den Schnitt V-V nach Fig. 3 einer zweiten Ausführungsform.

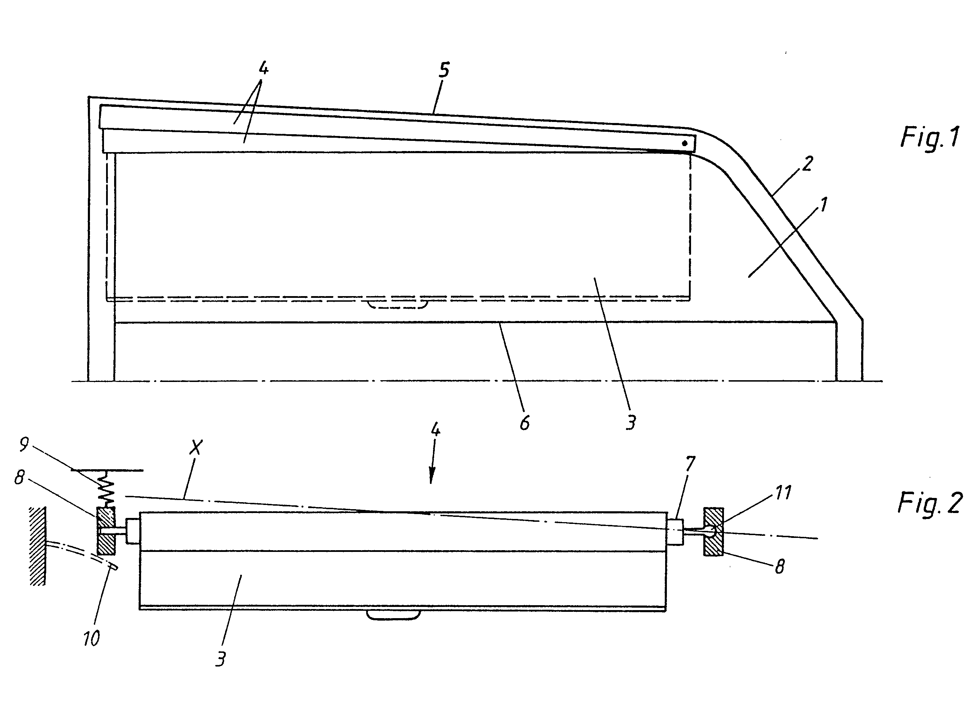

In Fig. 1 ist ein Fahrzeugseitenfenster 1 gezeigt, das sich in einer Tür 2 befindet und über wesentliche Bereiche von der lediglich gestrichelt dargestellten Materialbahn 3 eines Sonnenschutzrollos 4 abgedeckt ist. Die obere Rahmenleiste 5 des Fensters 1 verläuft mit Bezug auf die untere Rahmenleiste 6 schräg, d. h. die Rahmenleisten 5 und 6 sind nicht parallel zueinander ausgerichtet. Das Sonnenschutzrollo 4 ist im Ausführungsbeispiel nach Fig. 1 an der oberen Rahmenleiste 5 angeordnet und zwar derart, dass es sich in der Nichtgebrauchslage parallel zur oberen Rahmenleiste 5 und in der Gebrauchslage parallel zur unteren Rahmenleiste 6 erstreckt.

Die jeweils unterschiedlich axiale Ausrichtung des Sonnenschutzrollos 4 kann gemäss Fig. 2 durch eine bewegliche Anordnung eines der die Rollowelle 7 an ihren Enden haltenden Träger 8 erfolgen, und zwar vorzugsweise gegen die Wirkung einer Rückstellkraft. Die Rückstellkraft kann alternativ durch eine Zugfeder 9, an der der Träger 8 aufgehängt ist, oder durch eine den Träger 8 untergreifende Druckfeder 10 bewirkt werden. Die Federkraft ist so ausgelegt, dass das Sonnenschutzrollo 4 stets in der durch die strichpunktiert dargestellte und mit X bezeichnete Einbaulage (Nichtgebrauchslage) gehalten bzw. wieder zurückgeführt wird. Soll nun das Sonnenschutzrollo 4 aus der Lage X in die Gebrauchslage (wie dargestellt) überführt werden, so erfolgt dies automatisch durch die gegen die Rückstellkraft der Feder 9 oder 10 wirkenden Kräfte, die beim Abwickeln der Materialbahn 3 von der Rollowelle 7 aufgebracht werden. Dabei versteht es sich, dass die Rollowelle 7 mit einer nicht dargestellten Aufrollautomatik ausgerüstet ist, gegen deren Kraft das Abwickeln der Materialbahn erfolgen muss. Damit die Rollowelle 7 der Bewegung des beweglichen Trägers 8 folgen kann, ist als Verbindung der Rollowelle 7 mit dem starren Träger 8 ein Kugelgelenk 11 od. dgl. vorgesehen. Im einzelnen nicht dargestellt, aber selbstverständlich vorgesehen werden kann ein Anschlag zur Begrenzung des Bewegungshubes des beweglichen Trägers 8.

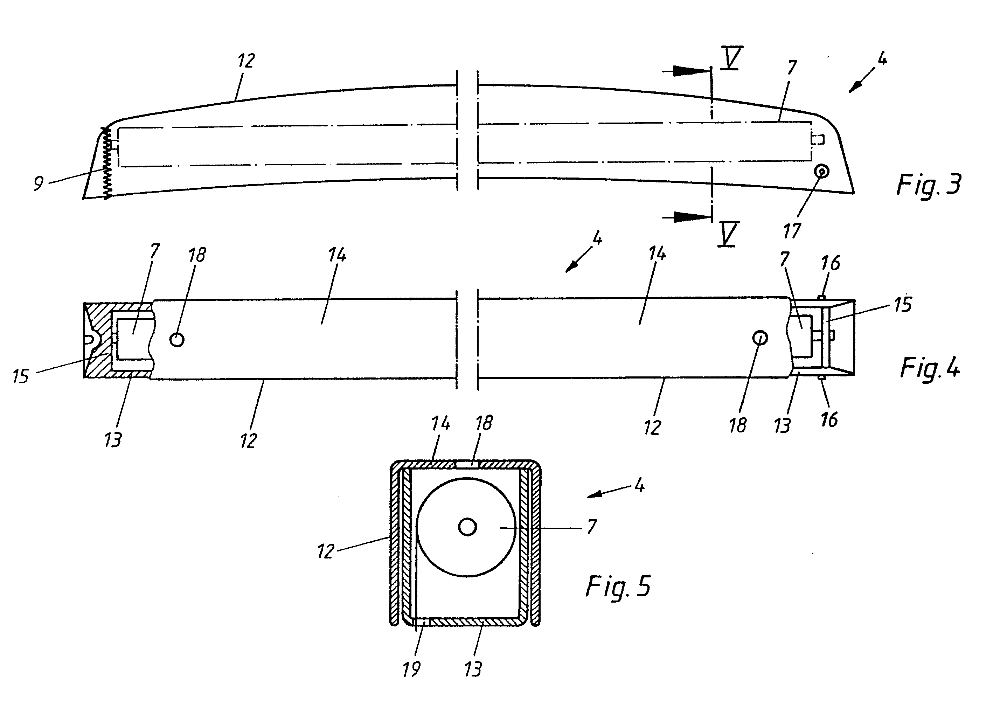

Die Fig. 3 bis 5 zeigen ein Sonnenschutzrollo 4, welches eine die Rollowelle 7 nebst Materialbahn 3 und die Elemente für die jeweilige axiale Ausrichtung der Rollowelle 7 aufnehmende Kassette 12 aufweist. Die Kassette 12 besteht aus zwei ineinandergeschachtelten Kassettenteilen 13 und 14 mit jeweils im wesentlichen U-förmigem Querschnitt (Fig. 5). Das innere Kassettenteil 13 bildet mit seinen Stirnenden 15 die Träger 8, welche die Rollowelle 7 zwischen sich aufnehmen. Da die Träger 8 bzw. die Stirnenden 15 durch die Wandungen des Kassettenteils 13 starr miteinander verbunden sind, müssen sie folglich beide bei der axialen Ausrichtung der Rollowelle 7 bewegt werden. Dies wird dadurch erreicht, dass das innere Kassettenteil 13 mit einem Endbereich scharnierend am anderen Kassettenteil 14 gelagert ist. Für die scharnierende Lagerung kann ein üblicher, die Kassettenteile 13, 14 querender Scharnierstift verwendet werden. Vorzugsweise sind jedoch an einem der Kassettenteile 13, 14 vorspringende Zapfen 16 angespritzt, die in entsprechende Aufnahmen 17 des anderen Kassettenteils eingreifen. An dem der scharnierenden Lagerung abgewandten Endbereich sind die Kassettenteile 13, 14 durch eine als Schraubenfeder ausgebildete Zugfeder 9 miteinander verbunden.

Für die Befestigung der Kassette 12 sind im Kassettenteil 14 Schraubendurchlassöffnungen 18 vorgesehen. Das Kassettenteil 13 weist einen Durchlassschlitz 19 für die Materialbahn 3, die aus jedem für ein Sonnenschutzrollo 4 geeigneten Material bestehen kann, auf. Die Kassettenteile 13, 14 sind zweckmässigerweise als Kunststoffspritzgusskörper ausgebildet.

## Patentansprüche

1. Sonnenschutzrollo (4), insbesondere für Fahrzeugfenster (1), mit zwei im Abstand voneinander an einem Fensterrahmen anordbaren Trägern (8) für eine Rollowelle (7), die an ihren Enden von den Trägern (8) gehalten wird und auf der eine von dieser abwickelbare Materialbahn (3) angeordnet ist, dadurch gekennzeichnet, dass die axiale Ausrichtung der Rollowelle (7) durch eine bewegliche Anordnung zumindest eines der Träger (8) am Fensterrahmen bei Gebrauch des Sonnenschutzrollos veränderbar ist.

2. Sonnenschutzrollo nach Anspruch 1, dadurch gekennzeichnet, dass der Träger (8) gegen die Wirkung einer Rückstellkraft bewegbar ist.

3. Sonnenschutzrollo nach einem der Ansprüche 1 oder 2, dadurch gekennzeichnet, dass der Träger (8) an einer Feder (9 oder 10) angeordnet ist.

4. Sonnenschutzrollo nach Anspruch 3, dadurch gekennzeichnet, dass als Feder (9 oder 10) eine Druckfeder (10) oder vorzugsweise eine Zugfeder (9) vorgesehen ist.

5. Sonnenschutzrollo nach einem oder mehreren der Ansprüche 1 bis 4, dadurch gekennzeichnet, dass die Rollowelle (7) dreh- und schwenkbeweglich in einer ihren Abmessungen angepassten und bis auf einen Durchlassschlitz (19) für die Materialbahn (3) im wesentlichen geschlossen ausgebildeten Kassette (12) angeordnet ist, die ihrerseits am Fensterrahmen befestigbar ist.

6. Sonnenschutzrollo nach Anspruch 5, dadurch gekennzeichnet, dass die Kassette (12) aus zwei ineinandergeschachtelten kastenförmigen Kassettenteilen (13, 14) mit jeweils im wesentlichen U-förmigem Querschnitt besteht, wobei das die Rollowelle (7) zwischen ihren die Träger (8) bildenden Stirnenden (15) aufnehmende Kassettenteil (13) mit einem Endbereich scharnierend am anderen Kassettenteil (14) gelagert ist.

7. Sonnenschutzrollo nach einem der Ansprüche 5 oder 6, dadurch gekennzeichnet, dass die Kassettenteile (13, 14) als Kunststoffspritzgusskörper ausgebildet sind und in der ineinandergeschachtelten Zusammenbaulage einendig durch einen sie querenden Scharnierstift oder durch angespritzte, in entsprechende Aufnahmen (17) des anderen Teils (13 oder 14) eingreifende Lagerzapfen (16) und anderendig durch eine Feder (9) miteinander verbunden sind.

## Claims

1. A roller sun-blind (4), particularly for a vehicle window (1), having two spacedly mountable brackets (8) for the roller (7), the brackets (8) being securable to the window frame, the roller being held at its ends by the brackets and carrying a length of material (3) arranged to be wound out and in, characterized in that the axial orientation of the roller (7) is variable, when operating the roller blind, as a result of at least one of the brackets (8) being movably mounted.

2. A roller sun-blind according to Claim 1, characterized in that the bracket (8) is movable against the bias of a restoring force.

3. A roller sun-blind according to one of Claims 1 or 2, characterized in that the bracket (8) is mounted on a spring (9 or 10).

4. A roller sun-blind according to Claim 3, characterized in that the spring (9 or 10) is a compression spring (10) or, preferably, a tension spring (9).

5. A roller sun-blind according to one or more of Claims 1 to 4, characterized in that the roller (7) is rotatably and tiltably arranged in a casket (12) sized to suit the roller's dimensions and, except for a slot (19) for the passage therethrough of the length of material (3), is substantially closed, and in that the casket is securable to the window frame.

6. A roller sun-blind according to Claim 5, characterized in that the casket (12) comprises two box-type casket parts (13, 14) fitted into one another, that the cross-section of each of the parts is substantially U-shaped, and in that one end portion of the casket part (13) housing the roller (7) between its end faces (15), which are constructed to form the brackets (8), is hingedly secured to the other casket part (14).

7. A roller sun-blind according to one of Claims 5 or 6, characterized in that the casket parts (13, 14) are injection-moulded plastics components which, in their assembled state of one fitted into the other, are·joined to each other at one of their respective ends by a transversely extending hinge pin or by spigots (16) integrally moulded with one of the parts (13 or 14) engaging matching recesses (17) in the other part and at their other ends by a tension spring (9).

## Revendications

1. Store pare-soleil à enroulement (4), notamment pour fenêtre (1) de véhicule, comportant deux supports (8) pouvant être placés à distance l'un de l'autre sur un cadre de vitre, destiné à un axe (7) de store, qui est retenu à ses extrémités par les supports (8) et sur lequel est placée une bande d'une matière (3) pouvant en être déroulée, caractérisé en ce que le positionnement axial de l'axe (7) du store peut être modifié grâce à une disposition d'au moins l'un des supports (8) de façon qu'il soit mobile sur le cadre de fenêtre lors de l'utilisation du store pare-soleil.

2. Store selon la revendication 1, caractérisé en ce que le support (8) peut être déplacé contre l'action d'un ressort de rappel.

3. Store selon l'une des revendications 1 ou 2, caractérisé en ce que le support (8) est placé sur un ressort (9 ou 10).

4. Store selon la revendication 3, caractérisé en ce que le ressort (9 ou 10) est réalisé sous la forme d'un ressort de compression (10) ou, de préférence, d'un ressort de traction (9).

5. Store selon une ou plusieurs des revendication 1 à 4, caractérisé en ce que son axe (7) est placé de façon à pouvoir tourner et pivoter dans une cassette (12) correspondant à ses dimensions et pratiquement fermée, à l'exception d'une fente (19) de passage de la bande de matière (3), pouvant être elle-même fixée au cadre de fenêtre.

6. Store selon la revendication 5, caractérisé en ce que la cassette (12) comprend deux parties en forme de boîte (13, 14) s'emboîtant l'une dans l'autre, présentant chacune une section droite sensiblement en U, la partie (13) de la cassette recevant l'axe (7) du store entre ses extrémités frontales (15) formant les supports (8) étant montée de façon qu'une zone terminale soit articulée sur l'autre partie (14) de la cassette.

7. Store selon l'une des revendications 5 ou 6, caractérisé en ce que les parties (13, 14) de la cassette sont conformées en pièces de matière plastique moulées par injection qui sont reliées entre elles, à une extrémité, par une tige de charnière qui les traverse ou par des tourillons (16) moulés par injection, pénétrant dans des logements (17) correspondants de l'autre partie (13 ou 14), et, à l'autre extrémité, par un ressort (9).

Fig.1

Fig.2

Fig. 3

Fig. 4

Fig. 5

0 087 555